# EUROPEAN PATENT SPECIFICATION

(11) **EP 0 686 207 B1**
(45) Date of publication and mention of the grant of the patent: **26.04.2000**
(21) Application number: 94908328.1
(22) Date of filing: 16.02.1994
(51) Int. Cl.: C22C 18/00, H01M 4/42

(54) **ZINC POWDER FOR ALKALINE BATTERIES**
ZINKPULVER FÜR ALKALISCHE BATTERIEN
POUDRE DE ZINC POUR BATTERIES ALCALINES

(30) Priority: 25.02.1993 BE 9300178
(43) Date of publication of application: 13.12.1995
(73) Proprietor: n.v. UNION MINIERE s.a., B-1200 Bruxelles (BE)
(72) Inventor: STRAUVEN, Ivan A.J., B-3580 Neerpelt (BE); MEEUS, Marcel L., B-3900 Lommel (BE)
(74) Representative: Saelemaekers, Juul
(86) International application number: EP9400449
(87) International publication number: WO9419502

(56) References cited:
- EP-A- 0 384 975
- EP-A- 0 427 315
- EP-A- 0 457 354
- EP-A- 0 571 717
- EP-A- 0 582 293
- DATABASE WPI Derwent Publications Ltd., London, GB; AN 87-254043 & JP,A,62 176 053 (MITSUI MINING & SMELTING) 1 August 1987 cited in the application

## Description

The present invention relates to an alkaline battery with an anode, a cathode and an electrolyte, the anode containing an aluminium-bearing zinc powder as an active material.

Aluminium-bearing zinc powders are known from EP-A-0427315. In this document protection is asked for a zinc base powder for alkaline batteries, characterized in that it contains 0.005-2% aluminium as well as
either 0.0001-0.01% REM, REM being a rare earth metal or a mixture of rare earth metals ; or, besides zinc and unavoidable impurities, only 0.0001-2% of at least one of the elements indium and REM ;
or, besides zinc and unavoidable impurities, only 0.003-2% bismuth and 0.0001-2% of at least one of the elements indium and REM ;
or, besides zinc and unavoidable impurities, only 0.005-2% lead and 0.0001-2% of at least one of the elements indium and REM ;
or, besides zinc and unavoidable impurities, only 0.005-2% lead, 0.003-2% bismuth and 0.0001-2% of at least one of the elements indium and REM.
The first example in this document relates to a powder that is made by atomizing a molten bath with the following composition : 220 ppm Al, 5 ppm La, 12 ppm Ce, 500 ppm Pb, 54 ppm In, the rest being thermally refined zinc. The second example relates to a powder made by atomizing a molten bath with the following composition : 600 ppm Al, 500 ppm Pb, 500 ppm Bi, 100 ppm In, the rest being thermally refined zinc. All other given examples concern powders having aluminium contents going from 0.03 up to 0.06% (all percents given herebefore and hereafter are percents by weight).
The powders according to these examples have in common with each other that they contain at least about 220 ppm Al and that they have a good resistance to corrosion in the electrolyte of the battery before and after partial discharging of the battery. However, they have a drawback in that they may cause a short circuit in certain types of batteries, among others the LR6-type and smaller types.

The aim of the present invention is to provide an aluminium-bearing zinc powder for alkaline batteries, which does not cause, or causes to a much lesser extent than the powders according to the examples of EP-A-0427315, a short circuit and which nevertheless has a sufficient resistance to corrosion.

The alkaline battery according to the invention is disclosed in claims 1 to 5 and includes one characterized in that the zinc powder consists of 0.0016-0.0095 wt/% aluminium, of one of 0.001-2 wt% bismuth, 0.005-2 wt% indium and 0.003-2 wt% lead, and optionally of 0.003-2% calcium, and for the rest of zinc and the unavoidable impurities present in the aforesaid metals, being excluded
- the alkaline batteries wherein the zinc powder contains, besides zinc and unavoidable impurities, only 0.01-0.5 wt% bismuth and 0.005-0.2 wt% in total of at least one of aluminium and calcium, and wherein at the same time the electrolyte contains yttrium hydroxide, prepared by subjecting an yttrium salt as a starting material to a neutralizing treatment in an aqueous solution thereof, in an amount of 0.005-0.5 wt% based on the zinc powder ; and
- the alkaline batteries wherein the zinc powder contains indium and 0.005 wt% aluminium, unless this powder contains calcium.

Indeed, regarding the aluminium in the powder according to the invention, the applicant has found that powder with a low Al content, in contrast to the powders according to the examples of EP-A-0427315, does not cause or seldom causes, a short circuit in the battery in which it is used. Likewise, the applicant has found, as will be proved further, that a very low Al content suffices to give the powder an adequate resistance to corrosion, particularly after partial or complete discharging of the battery. The other alloying elements (Bi and/or Pb and/or In) give the powder a sufficient resistance to corrosion before discharging. Therefore, the powder is suited to any type of alkaline battery such as LR6, LR14, LR20 and others.

Here, the following should be noted :
EP-A-0457354 relates among others to zinc powders for alkaline batteries containing 0.01-1% In, 0.005-0.5% in total of one or two of Pb and Bi and 0.005-0.2% in total of one or more of Li, Ca and Al. Many examples of compositions of powders are given : powders without Al, powders with Al ≥ 0.01% and also powders with 25 ppm Al, which however differ from the powder of the invention in that they contain Ca, In and Bi and optionally Pb. No example is given of a lithium bearing powder. However, it is stated that lithium has the same effect as aluminium. JP-A-62176053 describes amalgamated zinc powders containing 0.001-0.5% In, 0.005-0.5% Pb, 0.005-0.5% Al, 0.005-0.5% of one or more of Tl, Sn, Cd and Ga, 0.0001-0.5% of one or more of Li, Na, K, Rb and Ce and 0.005-0.5% of one or more of Ni, Co and Te. Thus these powders contain at least 6 alloying elements and are moreover amalgamated.
From EP-A-0384975 lithium bearing zinc alloys are known which are used for cups for Leclanché batteries. Lithium is added in order to improve the mechanical strength, a feature which has no significance in the case of zinc powders for alkaline batteries.
EP-A-0571717 relates to a method of manufacturing an unamalgamated zinc-alkaline battery employing a zinc alloy and an alkaline electrolyte containing 0.005-0.5 wt% of an yttrium salt, based on the zinc alloy. Among other, zinc alloy containing 0.01-0.5 wt% Bi, and a total of 0.005-0.2 wt% of Li, Ca and Al are claimed. The key element however is the addition of yttrium, which is said to provide for corrosion inhibition, allowing the manufacturing of non-polluting batteries with superior storage stability.
According to EP-A-0582293, an unamalgamated alkaline battery can be produced by adding a corrosion inhibitor selected from an indium compound, lead oxide, a hydroxide of alkaline earth metal or polyoxyethylen alkylamide to the electrolyte or to the anode. Among many other examples, Table 23 divulges in example 153 a composition with 130 ppm Bi, 500 ppm In and 30 ppm Al.
EP-A-0457354 also concerns a method of manufacturing a mercury-free alkaline battery with excellent shelf stability and comprising a corrosion-resistant zinc alloy containing at least one of In, Pb, Li, Ca and Al. More specifically, it discloses zinc alloys with 0.01-1 wt% In, 0.005-0.5 wt% of one or more of Pb and Bi, and 0.005-0.2 wt% of one or more of Li, Ca and Al.
Nothing in these documents suggests that there is a short circuit problem with higher Al contents and that this problem can be solved, without impairing substantially the corrosion resistance of the powder, by limiting the Al content.

The preferred compositions of the powder according to the invention are subject of the enclosed claims 6-15.

An easy way to produce the powder of the invention consists in adding all additives, which should be present in the powder to be produced (Al and for instance In and Bi), to the molten zinc and to atomize the thereby obtained alloy with gas, water or a mixture of both.
One can also atomize molten zinc containing already a part of the additives (for instance Al and Bi), whereafter the remaining additives (for instance In) are deposited on the atomized powder, either by cementation from an aqueous solution, or by physical deposition from a gaseous phase ("Physical Vapour Deposition" or PVD), or by chemical deposition from a gaseous phase ("Chemical Vapour Deposition" or CVD). It is clear that the cementation technique can only be applied if the additives are more electropositive than zinc. When more additives have to be deposited on the atomized powder, they can be deposited simultaneously or separately.
One can also atomize molten zinc as such and then deposit all additives on the atomized powder.
It is also possible to introduce a specific additive partly by alloying with the molten zinc and the remainder by deposition on the atomized powder.
Instead of atomization with gas, water or a mixture of both, any technique which is appropriate to convert a molten metal into a powder can be applied, such as for instance centrifugal atomization or casting and grinding of the cast metal.
In case the desired powder contains additives which can be cemented (for instance In), then still another way to produce the powder consists in preparing a powder with the additives which cannot be cemented and optionally with a part of the additives which can be cemented according to one of the abovementioned methods and making an anode from the thus obtained powder. That anode is introduced in the battery and the additives which can be cemented are added to the electrolyte of the battery, from which they cement on the powder of the anode.
This invention relates therefore not only to a powder such as it is introduced in the battery, but also to a powder such as it is present in the battery.

### Example 1

This example proves that zinc base powders according to the invention have a good resistance to corrosion in the electrolyte of the battery after partial discharging of the battery.

There are prepared 7 powders with the following composition : Zn, 500 ppm Pb, 500 ppm Bi, 500 ppm In and respectively 0, 5 ,7 ,16 ,21 ,70 en 280 ppm Al. To this end one starts from thermally refined zinc in molten state to which one adds the alloying elements in the desired amounts.
The thus obtained molten bath is homogenized at 450°C by stirring. The molten alloy is made to flow in a jet of compressed air, thereby producing an alloy powder, the particles of which have substantially the same homogeneous composition as that of the homogeneous molten bath.

The alloy powder is sifted so as to separate thereof the fraction over 500 µm and, as far as possible, the fraction below 104 µm. In this way an alloy powder with a particle size of 104 to 500 µm is obtained.

With the alloy powder one produces batteries of the LR14-type. These batteries are discharged at 2.2 Ohm for 2h. Subsequently on determines at 45°C the quantity of hydrogen which is evolved for 7 days. The results are summarized in the table below.

**TABLE**

| **Al-content ppm** | **gassing rate** µ**l/g day** |
|---|---|
| 0 | 96 |
| 5 | 45 |
| 7 | 30 |
| 16 | 20 |
| 21 | 10 |
| 70 | 11 |
| 280 | 2 |

These results prove that minor additions of Al reduce already considerably the gassing rate.

### Example 2

This example proves that zinc base powders according to the invention have a good resistance to corrosion in the electrolyte of the battery after partial discharging of the battery.

Three powders are prepared with the following composition : Zn, 500 ppm In, 500 ppm Bi and respectively 0, 35 and 70 ppm Al. To this end one proceeds like in example 1.

Batteries of the LR14-type are made with the alloy powder. The batteries are discharged at 2.2 Ohm for 9h. Subsequently one determines at 71°C the hydrogen which is evolved for 7 days. One obtains respectively : 165, 101 and 73 µl/g day.

### Example 3

This example proves that zinc base powder according to the invention does not cause any short circuit in the LR6-type battery.

Three powders are prepared with the following composition : Zn, 500 ppm In, 500 ppm Bi and respectively 30, 70 and 325 ppm Al. To this end one proceeds like in example 1.

These powders were supplied to battery-makers for use in batteries of the LR6-type. They have told the applicant that the powder with 325 ppm Al is not suited to that type of battery because it can cause short circuits, whereas the powders with 30 and 70 ppm are suited because they do not cause any short circuit in the same type of battery.

Other typical examples of powder according to the invention have the following composition :
Zn - 30 ppm Al - 250 ppm Bi
Zn - 40 ppm Al - 250 ppm Bi
Zn - 70 ppm Al - 250 ppm Bi
Zn - 85 ppm Al - 250 ppm Bi
Zn - 30 ppm Al - 250 ppm Bi - 180 ppm Ca
Zn - 70 ppm Al - 250 ppm Bi - 250 ppm Ca
Zn - 30 ppm Al - 250 ppm Bi - 45 ppm Ca
Zn -70 ppm Al - 250 ppm Bi - 100 ppm Ca
Zn - 30 ppm Al - 250 ppm Bi - 180 ppm Pb
Zn - 70 ppm Al - 250 ppm Bi - 250 ppm Pb
Zn - 30 ppm Al - 500 ppm Bi
Zn - 40 ppm Al - 500 ppm Bi
Zn - 70 ppm Al - 500 ppm Bi
Zn - 30 ppm Al - 500 ppm Bi - 180 ppm Ca
Zn - 30 ppm Al - 1000 ppm Bi
Zn - 40 ppm Al - 1000 ppm Bi
Zn - 70 ppm Al - 1000 ppm Bi
Zn - 30 ppm Al - 1000 ppm Bi - 180 ppm Ca
Zn - 40 ppm Al - 2300 ppm Bi
Zn - 70 ppm Al - 2300 ppm Bi
Zn - 70 ppm Al - 3000 ppm Bi
Zn - 40 ppm Al - 250 ppm In
Zn - 70 ppm Al - 250 ppm In
Zn - 40 ppm Al - 500 ppm In
Zn - 70 ppm Al - 500 ppm In
Zn - 40 ppm Al - 250 ppm In - 200 ppm Ca
Zn - 70 ppm Al - 250 ppm In - 200 ppm Ca
Zn - 40 ppm Al - 500 ppm In - 200 ppm Ca
Zn - 70 ppm Al - 500 ppm In - 200 ppm Ca
Zn - 30 ppm Al - 2300 ppm Bi - 180 ppm Ca
Zn - 30 ppm Al - 3000 ppm Bi - 180 ppm Ca
Zn - 30 ppm Al - 250 ppm In - 250 ppm Bi
Zn - 40 ppm Al - 250 ppm In - 250 ppm Bi
Zn - 70 ppm Al - 250 ppm In - 250 ppm Bi
Zn - 30 ppm Al - 500 ppm In - 250 ppm Bi
Zn - 40 ppm Al - 500 ppm In - 250 ppm Bi
Zn - 70 ppm Al - 500 ppm In - 250 ppm Bi
Zn - 30 ppm Al - 500 ppm In - 500 ppm Bi
Zn - 40 ppm Al - 500 ppm In - 500 ppm Bi
Zn - 70 ppm Al - 500 ppm In - 500 ppm Bi
Zn - 30 ppm Al - 500 ppm In - 1000 ppm Bi
Zn - 40 ppm Al - 500 ppm In - 1000 ppm Bi
Zn - 70 ppm Al - 500 ppm In - 1000 ppm Bi
Zn - 40 ppm Al - 500 ppm In - 2300 ppm Bi
Zn - 70 ppm Al - 500 ppm In - 2300 ppm Bi
Zn - 70 ppm Al - 500 ppm In - 3000 ppm Bi
Zn - 20 ppm Al - 500 ppm In - 1000 ppm Bi
Zn - 40 ppm Al - 500 ppm In - 1000 ppm Bi - 50 ppm Pb
Zn - 70 ppm Al - 500 ppm In - 100 ppm Bi - 50 ppm Pb
Zn - 40 ppm Al - 500 ppm In - 500 ppm Bi - 50 ppm Pb
Zn - 70 ppm Al - 500 ppm In - 500 ppm Bi - 50 ppm Pb
Zn - 40 ppm Al - 250 ppm In - 250 ppm Bi - 100 ppm Pb

These powders contain, besides zinc and unavoidable impurities, only the given additives. Unavoidable impurities are the impurities which are present in the zinc and in the additives.

## Claims

1. An alkaline battery having an anode, a cathode and an electrolyte, the anode containing an aluminium-bearing zinc powder as an active material, characterized in that the zinc powder consists of 0.0016-0.0095 wt% aluminium, of one of 0.001-2 wt% bismuth, 0.005-2 wt% indium and 0.003-2 wt% lead, and optionally of 0.003-2% calcium, and for the rest of zinc and the unavoidable impurities present in the aforesaid metals, being excluded
- the alkaline batteries wherein the zinc powder contains, besides zinc and unavoidable impurities, only 0.01-0.5 wt% bismuth and 0.005-0.2 wt% in total of at least one of aluminium and calcium, and wherein at the same time the electrolyte contains yttrium hydroxide, prepared by subjecting an yttrium salt as a starting material to a neutralizing treatment in an aqueous solution thereof, in an amount of 0.005-0.5 wt% based on the zinc powder ; and
- the alkaline batteries wherein the zinc powder contains indium and 0.005 wt% aluminium, unless this powder contains calcium.

2. An alkaline battery having an anode, a cathode and an electrolyte, the anode containing an aluminium-bearing zinc powder as an active material, characterized in that the zinc powder consists of 0.0016-0.0095 wt% aluminium, of one of 0.001-2 wt% bismuth, 0.005-2 wt% indium and 0.003-2 wt% lead, and optionally of 0.003-0.1% calcium, and for the rest of zinc and the unavoidable impurities present in the aforesaid metals, being excluded
- the alkaline batteries wherein the zinc powder contains, besides zinc and unavoidable impurities, only 0.01-0.5 wt% bismuth and 0.005 wt% in total of at least one of aluminium and calcium, and wherein at the same time the electrolyte contains yttrium hydroxide, prepared by subjecting an yttrium salt as a starting material to a neutralizing treatment in an aqueous solution thereof, in an amount of 0.005-0.5 wt% based on the zinc powder; and
- the alkaline batteries wherein the zinc powder contains indium and 0.005 wt% aluminium, unless this powder contains calcium.

3. An alkaline battery having an anode, a cathode and an electrolyte, the anode containing an aluminium-bearing zinc powder as an active material, characterized in that the zinc powder consists of 0.0016-0.0095 wt% aluminium, of 0.001-2 wt% bismuth, of 0.025-2 wt% indium, and optionally of 0.003-2 wt% lead, and for the rest of zinc and the unavoidable impurities present in the aforesaid metals, being excluded
- the alkaline batteries, wherein the zinc powder contains, besides zinc and unavoidable impurities, only 0.013 wt% bismuth, 0.05 wt% In and 0.003 wt% aluminium ; and
- the alkaline batteries, wherein the zinc powder contains indium and 0.005 wt% aluminium.

4. An alkaline battery having an anode, a cathode and an electrolyte, the anode containing an aluminium-bearing zinc powder as an active material, characterized in that the zinc powder consists of 0.0016-0.0045 wt% aluminium, of 0.001-2 wt% bismuth, of 0.005-2 wt% indium, and optionally of 0.003-2 wt% lead, and for the rest of zinc and the unavoidable impurities present in the aforesaid metals, being excluded the alkaline batteries, wherein the zinc powder contains, besides zinc and unavoidable impurities only 0.013 wt% bismuth, 0.05 wt% In and 0.003 wt% aluminium.

5. An alkaline battery having an anode, a cathode and an electrolyte, the anode containing an aluminium-bearing zinc powder as an active material, characterized in that the zinc powder consists of 0.0016-0.0095 wt% aluminium, of 0.001-2 wt% bismuth, of 0.025-0.1 wt% indium, and optionally of 0.003-2 wt% lead, and for the rest of zinc and the unavoidable impurities present in the aforesaid metals, being excluded
- the alkaline batteries, wherein the zinc powder contains, besides zinc and unavoidable impurities only 0.013 wt% bismuth, 0.05 wt% In and 0.003 wt% aluminium ; and
- the alkaline batteries wherein the zinc powder contains indium and 0.005 wt% aluminium.

6. An alkaline battery according to claim 1, 2, 3 or 5 characterized in that the powder contains 0.0016-0.0085 % Al.

7. An alkaline battery according to claim 6, characterized in that the powder contains 0.0016-0.007 % Al.

8. An alkaline battery according to claim 7, characterized in that the powder contains 0.0016-0.0045 % Al.

9. An alkaline battery according to claim 1, 2, 3 or 4 characterized in that the powder contains 0.01-0.1 % In.

10. An alkaline battery according to claim 1 or 2 characterized in that the powder contains 0.005-0.1 % Ca.

11. An alkaline battery according to one of the claims 1-10, characterized in that the powder contains 0.003-0.3 % Bi.

12. An alkaline battery according to claim 11, characterized in that the powder contains 0.003-0.2 % Bi.

13. An alkaline battery according to claim 12, characterized in that the powder contains 0.003-0.1 % Bi.

14. An alkaline battery according to one of the claims 1-13, characterized in that the powder contains 0.01-0.1 Pb.

15. An alkaline battery according to one of the claims 1-14, characterized in that the powder contains metals cemented from the electrolyte.

## Patentansprüche

1. Alkalische Batterie mit einer Anode, einer Kathode und einem Elektrolyt, wobei die Anode als aktives Material ein aluminiumhaltiges Zinkpulver enthält, dadurch gekennzeichnet, daß das Zinkpulver aus 0,0016-0,0095 Gew.-% Aluminium, entweder 0,001-2 Gew.-% Wismuth, 0,005-2 Gew.-% Indium oder 0,003-2 Gew.-% Blei und gegebenenfalls 0,003-2 Gew.-% Calcium und ansonsten aus Zink und den in den obengenannten Metallen enthaltenen unvermeidbaren Verunreinigungen besteht; jedoch unter Ausschluß
- der alkalischen Batterien, bei denen das Zinkpulver neben Zink und unvermeidbaren Verunreinigungen nur 0,01-0,5 Gew.-% Wismuth und insgesamt 0,005-0,2 Gew.-% mindestens eines der Elemente Aluminium oder Calcium enthält, und wobei gleichzeitig der Elektrolyt einen Anteil von 0,005-0,5 Gew.-%, bezogen auf das Zinkpulver, an Yttriumhydroxid, welches durch neutralisierende Behandlung einer Yttriumsalz-Ausgangsverbindung in einer wäßrigen Lösung derselben dargestellt wurde, enthält; und
- der alkalischen Batterien, bei denen das Zinkpulver Indium und 0,005 Gew.-% Aluminium enthält, es sei denn, das Pulver enthält Calcium.

2. Alkalische Batterie mit einer Anode, einer Kathode und einem Elektrolyt, wobei die Anode als aktives Material ein aluminiumhaltiges Zinkpulver enthält, dadurch gekennzeichnet, daß das Zinkpulver aus 0,0016-0,0095 Gew.-% Aluminium, entweder 0,001-2 Gew.-% Wismuth, 0,005-2 Gew.-% Indium oder 0,003-2 Gew.-% Blei und gegebenenfalls 0,003-0,1 Gew.-% Calcium und ansonsten aus Zink und den in den obengenannten Metallen enthaltenen unvermeidbaren Verunreinigungen besteht; jedoch unter Ausschluß
- der alkalischen Batterien, bei denen das Zinkpulver neben Zink und unvermeidbaren Verunreinigungen nur 0,01-0,5 Gew.-% Wismuth und insgesamt 0,005 Gew.-% mindestens eines der Elemente Aluminium oder Calcium enthält, und wobei gleichzeitig der Elektrolyt einen Anteil von 0,005-0,5 Gew.-%, bezogen auf das Zinkpulver, an Yttriumhydroxid, welches durch neutralisierende Behandlung einer Yttriumsalz-Ausgangsverbindung in einer wäßrigen Lösung derselben dargestellt wurde, enthält; und
- der alkalischen Batterien, bei denen das Zinkpulver Indium und 0,005 Gew.-% Aluminium enthält, es sei denn, das Pulver enthält Calcium.

3. Alkalische Batterie mit einer Anode, einer Kathode und einem Elektrolyt, wobei die Anode als aktives Material ein aluminiumhaltiges Zinkpulver enthält, dadurch gekennzeichnet, daß das Zinkpulver aus 0,0016-0,0095 Gew.-% Aluminium, 0,001-2 Gew.-% Wismuth, 0,025-2 Gew.-% Indium und gegebenenfalls 0,003-2 Gew.-% Blei und ansonsten aus Zink und den in den obengenannten Metallen enthaltenen unvermeidbaren Verunreinigungen besteht; jedoch unter Ausschluß
- der alkalischen Batterien, bei denen das Zinkpulver neben Zink und unvermeidbaren Verunreinigungen nur 0,013 Gew.-% Wismuth, 0,05 Gew.-% In und 0,003 Gew.-% Aluminium enthält; und
- der alkalischen Batterien, bei denen das Zinkpulver Indium und 0,005 Gew.-% Aluminium enthält.

4. Alkalische Batterie mit einer Anode, einer Kathode und einem Elektrolyt, wobei die Anode als aktives Material ein aluminiumhaltiges Zinkpulver enthält, dadurch gekennzeichnet, daß das Zinkpulver aus 0,0016-0,0045 Gew.-% Aluminium, 0,001-2 Gew.-% Wismuth, 0,005-2 Gew.-% Indium und gegebenenfalls 0,003-2 Gew.-% Blei und ansonsten aus Zink und den in den obengenannten Metallen enthaltenen unvermeidbaren Verunreinigungen besteht; jedoch unter Ausschluß der alkalischen Batterien, bei denen das Zinkpulver neben Zink und unvermeidbaren Verunreinigungen nur 0,013 Gew.-% Wismuth, 0,05 Gew.-% In und 0,003 Gew.-% Aluminium enthält.

5. Alkalische Batterie mit einer Anode, einer Kathode und einem Elektrolyt, wobei die Anode als aktives Material ein aluminiumhaltiges Zinkpulver enthält, dadurch gekennzeichnet, daß das Zinkpulver aus 0,0016-0,0095 Gew.-% Aluminium, 0,001-2 Gew.-% Wismuth, 0,025-0,1 Gew.-% Indium und gegebenenfalls 0,003-2 Gew.-% Blei und ansonsten aus Zink und den in den obengenannten Metallen enthaltenen unvermeidbaren Verunreinigungen besteht; jedoch unter Ausschluß
- der alkalischen Batterien, bei denen das Zinkpulver neben Zink und unvermeidbaren Verunreinigungen nur 0,013 Gew.-% Wismuth, 0,05 Gew.-% In und 0,003 Gew.-% Aluminium enthält; und
- der alkalischen Batterien, bei denen das Zinkpulver Indium und 0,005 Gew.-% Aluminium enthält.

6. Alkalische Batterie nach Anspruch 1, 2, 3 oder 5, dadurch gekennzeichnet, daß das Pulver 0,0016-0,0085 Gew.-% Al enthält.

7. Alkalische Batterie nach Anspruch 6, dadurch gekennzeichnet, daß das Pulver 0,0016-0,007 Gew.-% Al enthält.

8. Alkalische Batterie nach Anspruch 7, dadurch gekennzeichnet, daß das Pulver 0,0016-0,0045 Gew.-% Al enthält.

9. Alkalische Batterie nach Anspruch 1, 2, 3 oder 4, dadurch gekennzeichnet, daß das Pulver 0,01-0,1 Gew.-% In enthält.

10. Alkalische Batterie nach Anspruch 1 oder 2, dadurch gekennzeichnet, daß das Pulver 0,005-0,1 Gew.-% Ca enthält.

11. Alkalische Batterie nach einem der Ansprüche 1-10, dadurch gekennzeichnet, daß das Pulver 0,003-0,3 Gew.-% Bi enthält.

12. Alkalische Batterie nach Anspruch 11, dadurch gekennzeichnet, daß das Pulver 0,003-0,2 Gew.-% Bi enthält.

13. Alkalische Batterie nach Anspruch 12, dadurch gekennzeichnet, daß das Pulver 0,003-0,1 Gew.-% Bi enthält.

14. Alkalische Batterie nach einem der Ansprüche 1-13, dadurch gekennzeichnet, daß das Pulver 0,01-0,1 Gew.-% Pb enthält.

15. Alkalische Batterie nach einem der Ansprüche 1-14, dadurch gekennzeichnet, daß das Pulver aus dem Elektrolyt auszementiertes Metall enthält.

## Revendications

1. Pile alcaline ayant une anode, une cathode et un électrolyte, l'anode contenant une poudre de zinc contenant de l'aluminium en tant que matière active, caractérisée en ce que la poudre de zinc est constituée de 0,0016-0,0095% en poids d'aluminium, de l'un parmi 0,001-2% en poids de bismuth, 0,005-2% en poids d'indium et 0,003-2% en poids de plomb, et éventuellement de 0,003-2% de calcium, et pour le reste de zinc et des impuretés inévitables présentes dans les métaux susdits, à l'exclusion
- des piles alcalines dans lesquelles la poudre de zinc contient, en plus du zinc et des impuretés inévitables, seulement de 0,01-0,5% en poids de bismuth et de 0,005-0,2% en poids au total d'au moins l'un parmi l'aluminium et le calcium, et dans lesquelles l'électrolyte contient en même temps de l'hydroxyde d'yttrium, préparé en soumettant un sel d'yttrium en tant que substance de départ à un traitement neutralisant dans une solution aqueuse de celui-ci, en une quantité de 0,005-0,5% en poids par rapport à la poudre de zinc ; et
- des piles alcalines dans lesquelles la poudre de zinc contient de l'indium et 0,005% d'aluminium, à moins que cette poudre ne contienne du calcium.

2. Pile alcaline ayant une anode, une cathode et un électrolyte, l'anode contenant une poudre de zinc contenant de l'aluminium en tant que matière active, caractérisée en ce que la poudre de zinc est constituée de 0,0016-0,0095% en poids d'aluminium, de l'un parmi 0,001-2% en poids de bismuth, 0,005-2% en poids d'indium et 0,003-2% en poids de plomb, et éventuellement de 0,003-0,1% de calcium, et pour le reste de zinc et des impuretés inévitables présentes dans les métaux susdits, a l'exclusion
- des piles alcalines dans lesquelles la poudre de zinc contient, en plus du zinc et des impuretés inévitables, seulement de 0,01-0,5% en poids de bismuth et 0,005% en poids au total d'au moins l'un parmi l'aluminium et le calcium, et dans lesquelles l'électrolyte contient en même temps de l'hydroxyde d'yttrium, préparé en soumettant un sel d'yttrium en tant que substance de départ à un traitement neutralisant dans une solution aqueuse de celui-ci, en une quantité de 0,005-0,5% en poids par rapport à la poudre de zinc ; et
- des piles alcalines dans lesquelles la poudre de zinc contient de l'indium et 0,005% d'aluminium, à moins que cette poudre ne contienne du calcium.

3. Pile alcaline ayant une anode, une cathode et un électrolyte, l'anode contenant une poudre de zinc contenant de l'aluminium en tant que matière active, caractérisée en ce que la poudre de zinc est constituée de 0,0016-0,0095% en poids d'aluminium, de 0,001-2% en poids de bismuth, de 0,025-2% en poids d'indium, et éventuellement de 0,003-2% en poids de plomb, et pour le reste de zinc et des impuretés inévitables présentes dans les métaux susdits, à l'exclusion
- des piles alcalines dans lesquelles la poudre de zinc contient, en plus du zinc et des impuretés inévitables, seulement 0,013% en poids de bismuth, 0,05% en poids de In et 0,003% en poids d'aluminium ; et
- des piles alcalines dans lesquelles la poudre de zinc contient de l'indium et 0,005% en poids d'aluminium.

4. Pile alcaline ayant une anode, une cathode et un électrolyte, l'anode contenant une poudre de zinc contenant de l'aluminium en tant que matière active, caractérisée en ce que la poudre de zinc est constituée de 0,0016-0,0045% en poids d'aluminium, de 0,001-2% en poids de bismuth, de 0,005-2% en poids d'indium, et éventuellement de 0,003-2% en poids de plomb, et pour le reste de zinc et des impuretés inévitables présentes dans les métaux susdits, à l'exclusion des piles alcalines dans lesquelles la poudre de zinc contient, en plus du zinc et des impuretés inévitables, seulement 0,013% en poids de bismuth, 0,05% en poids de In et 0,003% en poids d'aluminium.

5. Pile alcaline ayant une anode, une cathode et un électrolyte, l'anode contenant une poudre de zinc contenant de l'aluminium en tant que matière active, caractérisée en ce que la poudre de zinc est constituée de 0,0016-0,0095% en poids d'aluminium, de 0,001-2% en poids de bismuth, de 0,025-0,1% en poids d'indium, et éventuellement de 0,003-2% en poids de plomb, et pour le reste de zinc et des impuretés inévitables présentes dans les métaux susdits, à l'exclusion
- des piles alcalines dans lesquelles la poudre de zinc contient, en plus du zinc et des impuretés inévitables, seulement 0,013% en poids de bismuth, 0,05% en poids de In et 0,003% en poids d'aluminium ; et
- des piles alcalines dans lesquelles la poudre de zinc contient de l'indiumn et 0,005% en poids d'aluminium.

6. Pile alcaline selon la revendication 1, 2, 3 ou 5, caractérisée en ce que la poudre contient de 0,0016-0,0085% de Al.

7. Pile alcaline selon la revendication 6, caractérisée en ce que la poudre contient de 0,0016-0,007% de Al.

8. Pile alcaline selon la revendication 7, caractérisée en ce que la poudre contient de 0,0016-0,0045% de Al.

9. Pile alcaline selon la revendication 1, 2, 3 ou 4, caractérisée en ce que la poudre contient de 0,01-0,1% de In.

10. Pile alcaline selon la revendication 1 ou 2, caractérisée en ce que la poudre contient de 0,005-0,1% de Ca.

11. Pile alcaline selon l'une des revendications 1 à 10, caractérisée en ce que la poudre contient de 0,003-0,3% de Bi.

12. Pile alcaline selon la revendication 11, caractérisée en ce que la poudre contient de 0,003-0,2% de Bi.

13. Pile alcaline selon la revendication 12, caractérisée en ce que la poudre contient de 0,003-0,1% de Bi.

14. Pile alcaline selon l'une des revendications 1 à 13, caractérisée en ce que la poudre contient de 0,01-0,1% de Pb.

15. Pile alcaline selon l'une des revendications 1 à 14, caractérisée en ce que la poudre contient des métaux cimentés à partir de l'électrolyte.
